# EUROPEAN PATENT SPECIFICATION

(11) **EP 1 808 760 B1**
(45) Date of publication and mention of the grant of the patent: **27.02.2019**
(21) Application number: 06256398.6
(22) Date of filing: 15.12.2006
(51) Int. Cl.: H04L 12/24

(54) **Communication system, peripheral device, and computer usable medium therefor**
Kommunikationssystem, peripheres Gerät und rechnerlesbares Medium dafür
Système de communication, dispositif périphérique et support lisible par ordinateur pour celui-ci

(30) Priority: 16.12.2005 JP 2005363255
(43) Date of publication of application: 18.07.2007
(73) Proprietor: BROTHER KOGYO KABUSHIKI KAISHA, Aichi, 467-8561 (JP)
(72) Inventor: Miyazawa, Masafumi, c/o Brother Kogyo K.K., Nagoya-shi, Aichi-ken 467-8562 (JP)
(74) Representative: J A Kemp

(56) References cited:
- EP-A- 1 143 695
- EP-A- 1 178 393
- US-A1- 2005 066 072

## Description

### Cross Reference to Related Application

This application claims priority from Japanese Patent Application No.2005-363255, filed on December 16, 2005.

### Background

### Technical Field

Aspects of the present invention relate to a peripheral device incorporating a plurality of interfaces, a communication system having such a peripheral device and a host computer, and a program for the peripheral device.

### Related Art

Conventionally, a printing apparatus connected with a host computer through a interface such as a LAN interface and a USB interface is known. Also, the printing apparatus having a plurality of interfaces for communicating with a host computer is known, and an example of such a printing apparatus is disclosed in Japanese Patent Provisional Publication No.HEI8-314651. Further, mobile computers have become widespread in recent years, and in keeping with this trend, various communication systems mixed with a wired LAN and a wireless LAN have been increasingly built in many offices and companies.

There have been a problem that users have to work on communication setting for both of a plurality of interfaces respectively that requires rather complicated operations.

US 2005/0066072 A1 discloses a peripheral control device for allowing the user to select preferentially a setting of a peripheral device through a wireline port. When changing a setting of a wireless LAN printer, the utility communicates with the printer through each printer port installed at the time of activating the setup utility, not via wireless LAN.

### Summary

Aspects of the present invention are advantageous in that a communication system having a peripheral device being equipped with a plurality of interfaces and a host computer, wherein operability in configuring and configuration checking operation of each of the interface is improved, is provided.

The following describes general aspects of the invention that may or may not be included in various examples and modifications. It should be noted that various connections are set forth between elements in the following description. It should be noted that these connections in general and, unless specified otherwise, may be direct or indirect and that this specification is not intended to be limiting in this respect.

The present invention provides a peripheral device and a communication system incorporating the peripheral device, in accordance with the appended claims.

According to another aspects of the invention, there is provided a computer usable medium according to claim 8.

### Brief Description of the Accompanying Drawings

Fig. 1 is a schematic diagram showing a configuration of a communication system according to a first aspect of the present invention.
Fig. 2 is an illustrative diagram showing a configuration of communication management data stored in an EEPROM according to the first aspect of the present invention.
Fig. 3 is a flowchart showing a request acceptance process to be executed repeatedly by a CPU of a printing apparatus according to the first aspect of the present invention.
Fig. 4 is an illustrative diagram showing a storing manner of connection interface numbers in management PCs according to the first aspect of the present invention.
Fig. 5 is a flowchart showing a communication configuration process to be executed by CPUs of the management PCs according to the first aspect of the present invention.
Figs. 6A, 6B are illustrative diagrams showing a communication configuration window according to the first aspect of the present invention.
Fig. 7 is a flowchart showing a request acceptance process to be executed repeatedly by a CPU of a printing apparatus according to a second aspect of the present invention.
Fig. 8 is a flowchart showing a communication configuration process to be executed by a CPU of a management PC according to the second aspect of the present invention.
Fig. 9 is a flowchart showing a web server process to be executed repeatedly by a CPU of a printing apparatus according to an embodiment of the present invention.
Fig. 10 is a flowchart showing a setting screen creation transmission process to be executed by the CPU of the printing apparatus according to the embodiment of the present embodiment.
Fig. 11 is an illustrative diagram showing a configuration of a web page to be transmitted in the web server process according to the embodiment of the present invention.

### Detailed Description

Hereinafter, referring to accompanying drawings, aspects and embodiments of the present invention will be described.

### First aspect

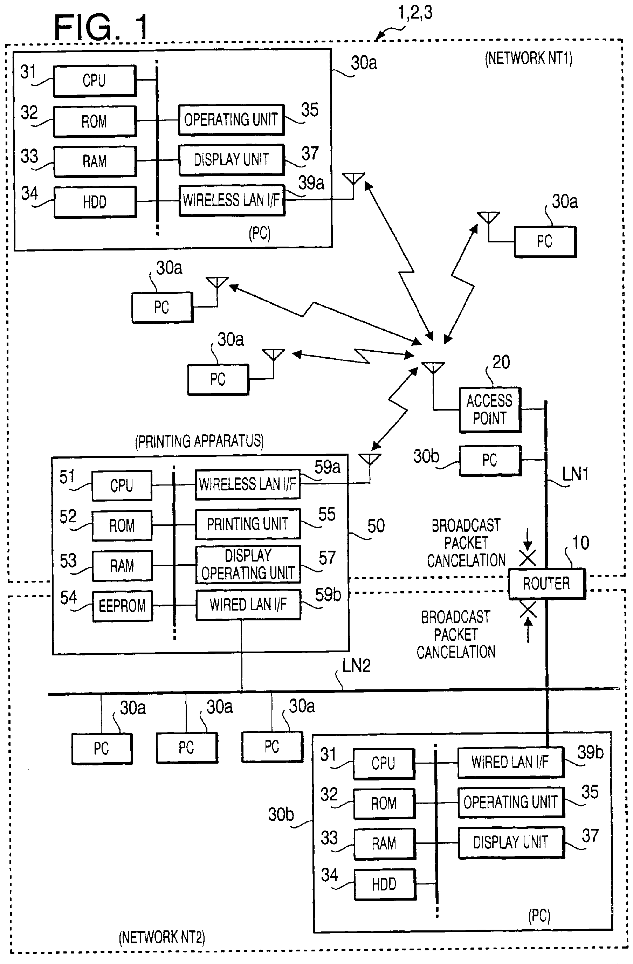

Fig. 1 is a schematic diagram showing a configuration of a communication system 1 according to a first aspect of the present invention. As shown in Fig. 1, the communication system 1 in the present aspect includes a first network NT1 and a second network NT2, which are interconnected via a router 10. As is well known in the art, the router 10 is for relaying communication between the first network NT1 and the second network NT2 and has a filtering function. More specifically, the router 10 has a delivery restricting function on specific packets, for example, it is configured not to relay broadcast packets to the other network. In other words, a broadcast communication which is performed in the communication system 1 according to the present aspect is blockaded within each network NT1, NT2 separated by the router 10.

The first network NT 1 is configured such that a wireless LAN access point 20 is connected to the router 10 via a LAN cable LN1. In the network NT1, a PC (personal computer) 30a, which is provided with a wireless LAN I/F (interface) 39a, and a printing apparatus 50 are connected via the wireless LAN access point 20 to be capable of communicating each other.

On the other hand, the second network NT2 is configured as a wired LAN. In the network NT2, a PC 30b, which is provided with a wired LAN I/F 39b, and the printing apparatus 50 are connected via a LAN cable LN2 to be capable of communicating each other.

Each of the PCs 30a, 30b, which is connected with the first network NT1 and the second network NT2 respectively, is provided with a CPU 31, which executes various computation, a ROM 32, which includes various programs such as a boot program, a RAM 33 as a working memory, an HDD (hard disk drive) 34, which is stored with various types of software and data such as printer driver, an operating unit 3, which includes various devices such as a keyboard and a pointing device, and a display unit 37 which includes for example an LCD (liquid crystal display) monitor. Each of the PCs 30a, 30b is operated in a multitasking OS, which is capable of displaying various windows configured by GUI (Graphical User Interface).

The PC 30a is provided with the wireless LAN I/F 39a, which is capable of communicating with a node in a wireless LAN via the wireless LAN access point 20, and the PC 30b is provide with the wired LAN I/F 39b, which is capable of communicating with a node in a wired LAN via the LAN cable LN2.

Furthermore, the printing apparatus 50, which is connected to both of the first network NT1 and the second network NT2, is provided with a CPU 51, which executes various computation, a ROM 52, which includes various programs, a RAM 53 as a working memory, an EEPROM 54, which includes various configuration information, a printing unit 55, which forms images on a recording medium such as paper by a printing mechanism such as ink-jet and laser, a display operating unit 57, which is provided with various operation keys for users to be able to operate and a display unit to display information, a wireless LAN I/F 59a, which is capable of communicating with a node in a wireless LAN via the wireless LAN access point 20, and a wired LAN I/F 59b which is capable of communicating with a node in a wired LAN via the LAN cable LN2.

The printing apparatus 50 is provided with the ROM 52, which includes the programs for the CPU 51 to achieve functions as a print server, and a function as an SNMP (Simple Network Management Protocol) agent, and the CPU 51 actualizes the function as the print server, and the function as the SNMP agent by executing these programs at the time of activation. For example, upon receiving print data for printing from the external PCs 30a, 30b via the wireless LAN I/F 59a or the wired LAN I/F 59b, the CPU 51 controls the printing unit 55 to form printing images on the recording medium based on the print data.

Further, the printing apparatus 50 has communication management data DT as manageable data by SNMP in an MIB (Management Information Base) 54a of the EEPROM 54. The communication management data DT indicates configuration information related to the wireless LAN I/F 59a and the wired LAN I/F 59b.

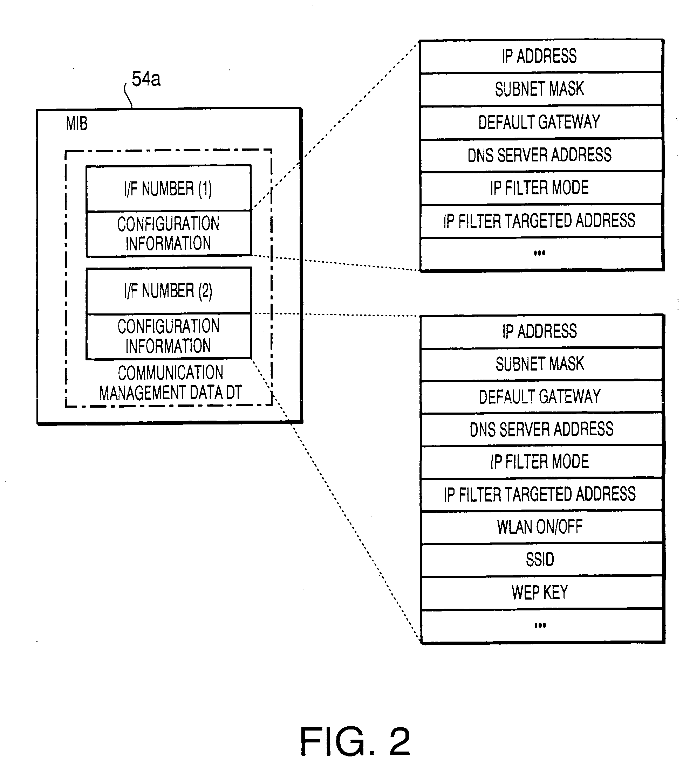

Fig. 2 is an illustrative diagram showing a configuration of the communication management data DT stored in the MIB 54a of the EEPROM 54 according to the first aspect of the present invention. The communication management data DT describes the configuration information of each of the I/Fs 59a, 59b which is associated with I/F numbers respectively. The I/F numbers function as identification numbers of the I/Fs, and in the present aspect, the I/F number "1" is assigned to the wired LAN I/F 59b, and the I/F number "2" is assigned to the wireless LAN I/F 59a.

The configuration information of the wired LAN I/F 59b indicated in the communication management data DT is provided with an IP address, which is uniquely set to this wired LAN I/F 59b, a subnet mask, a default gateway, a DNS (Domain Name Server) address, and information of the IP filter mode and the IP filter targeted addresses.

Additionally, the printing apparatus 50 according to the present aspect has an IP filter function, which cancels transmitting an IP packet transmitted from a specific source of an IP address to downstream tasks upon receiving the IP packet, and aforementioned information of the IP filter mode and the IP filter targeted address related to the wired LAN I/F 59b functions as information for defining the IP filter function about the IP packets received through the wired LAN I/F 59b.

Specifically, the IP filter function has an "accept" mode and a "reject" mode, and information of the IP filter mode stored in the MIB 54a indicates either of the modes between the "accept" mode or the "reject" mode which is currently set up. The information of the IP filter targeted address defines a range of source IP addresses which packets are not to be canceled or which packets are to be canceled by the IP filter function and is configured with a combination of the IP address and the subnet mask.

More specifically, when the IP filter function is set in the "accept" mode, the IP filter targeted address indicates a range of the source IP addresses of the packets which are not to be canceled by the IP filter function. For example, when the IP address of the IP filter targeted address is "aaa.bbb.ccc.ddd" and the subnet mask is "255.255.0.0", the source IP addresses of the packets of which higher 2 bytes are "aaa.bbb" are not canceled by the IP filter function. Thus, when the IP filter function is set in the "accept" mode, and when the source IP addresses of the packets which are within a range indicated by the IP filter targeted address are delivered, these packets are transmitted to the downstream tasks without being canceled by the IP filter function, while the other received packets are canceled and not transmitted to the downstream tasks.

On the other hand, when the IP filter function is set in the "reject" mode, the IP filter targeted address indicates a range of the source IP addresses of the packets which are to be canceled by the IP filter function. For example, when the IP address of the IP filter targeted address is "aaa.bbb.ccc.ddd" and the subnet mask is "255.255.0.0", the source IP addresses of the packets of which higher 2 bytes are "aaa.bbb" are canceled by the IP filter function. Thus, when the IP filter function is set in the "reject" mode, and when the source IP addresses of the packets which are within a range indicated by the IP filter targeted address are delivered, these packets are canceled and not transmitted to the downstream tasks by the IP filter function, while the other received packets are transmitted without being canceled.

The communication management data DT is provided with information as the configuration information of the wireless LAN I/F 59a including an IP address, which is set to this wireless LAN I/F 59a, a subnet mask, a default gateway, a DNS server address, and information of the IP filter mode and the IP filter targeted addresses, ON/OFF setup information of the wireless LAN function, and information of the SSID (Service Set ID) and an encryption key (i.e., a WEP (Wired Equivalent Privacy) key).

Similarly to the wired LAN I/F 59b, information of the IP filter mode and the IP filter targeted address of the wireless LAN I/F 59a functions as information for defining the IP filter function about the IP packets received through the wireless LAN I/F 59a. Each of the I/Fs 59a, 59b provided to the printing apparatus 50 executes, in association with the CPU 51, an operation corresponding to the configuration information of the I/Fs 59a, 59b indicated in the MIB 54a respectively, and thus achieves communication unique to each I/F.

When the CPU 51 of the printing apparatus 50 receives various requests in the SNMP from the PC 30a, 30b (hereinafter, also referred to as "management PCs"), which manage the printing apparatus 50, the CPU 51 executes corresponding processes.

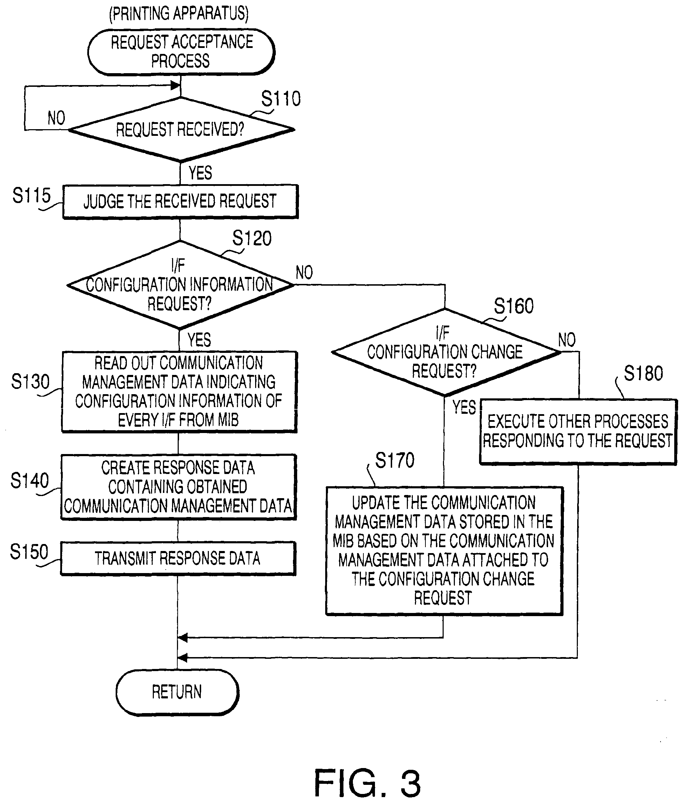

Fig. 3 is a flowchart showing a request acceptance process to be executed repeatedly by the CPU 51 of the printing apparatus 50 according to the first aspect of the present invention. As the request acceptance process starts, the CPU 51 stands by until it receives a request transmitted from one of the management PCs 30a, 30b via the wireless LAN I/F 59a or the wired LAN I/F 59b (S110). When the CPU 51 receives any request (S110: YES), the process proceeds to S115, and identifies a type of the received request (S115).

If the received request is an I/F configuration information request for requesting configuration information of each I/F, the CPU 51 judges as YES in the following S120, and obtains the aforementioned communication management data DT, in which configuration information of respective I/Fs is written, from the MIB 54a (S130), and generates response data containing the communication management data DT (S140). Thereafter, the CPU 51 transmits the created response data (i.e., a response) to the request source, which is one of the management PCs 30a, 30b (S150). Thereafter, the CPU 51 proceeds to S110 and stands by until a next request is received.

If the request received in S110 is not an I/F configuration information request, but an I/F configuration change request for requesting configuration change of each I/F, the CPU 51 judges as NO in the next S120 and judges as YES in S160, and updates the communication management data DT stored in the MIB 54a based on the communication management data DT contained in the received I/F configuration change request (S170). With this step, the CPU 51 updates the configuration information of each I/F. Thereafter, the process proceeds to S110 and stands by until a next request is received.

Meanwhile, if the request received in S110 is neither the I/F configuration information request nor the I/F configuration change request, the CPU 51 judges as NO in S160 and executes a process responding to the received request (S180). Thereafter, the process proceeds to S110 and stands by a next request is received.

Next, a detailed configuration of the management PCs 30a, 30b, which manage the printing apparatus 50, will be explained. In the communication system 1 according to the present aspect, each of the first network NT1 and the second network NT2 is provided with at least one of the PCs (the management PCs) 30a, 30b having a function as an SNMP manager that is capable of managing the printing apparatus 50.

Each of the management PCs 30a, 30b stores a connection I/F number indicating one of the I/F 59a and the I/F 59b, which is used for communicating with the printing apparatus 50 respectively, in the HDD 34.

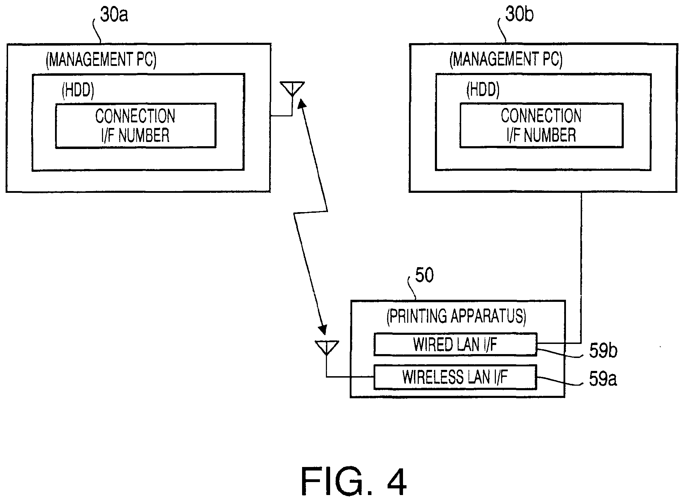

Fig. 4 is an illustrative diagram showing a storing manner of the connection interface numbers in the management PCs 30a, 30b according to the first aspect of the present invention. The connection I/F numbers are written in each HDD 34 when a program for managing the printing apparatus 50 is installed in the PCs 30a, 30b. For example, a connection I/F number "1" is written in the HDD 34 as an initial value at the time of installation. When an instruction to display a communication configuration window WN is inputted by the user through the operating unit 35, the management PCs 30a, 30b read out the program for managing the printing apparatus 50, and the CPUs 31 of the management PCs 30a, 30b execute the communication configuration process.

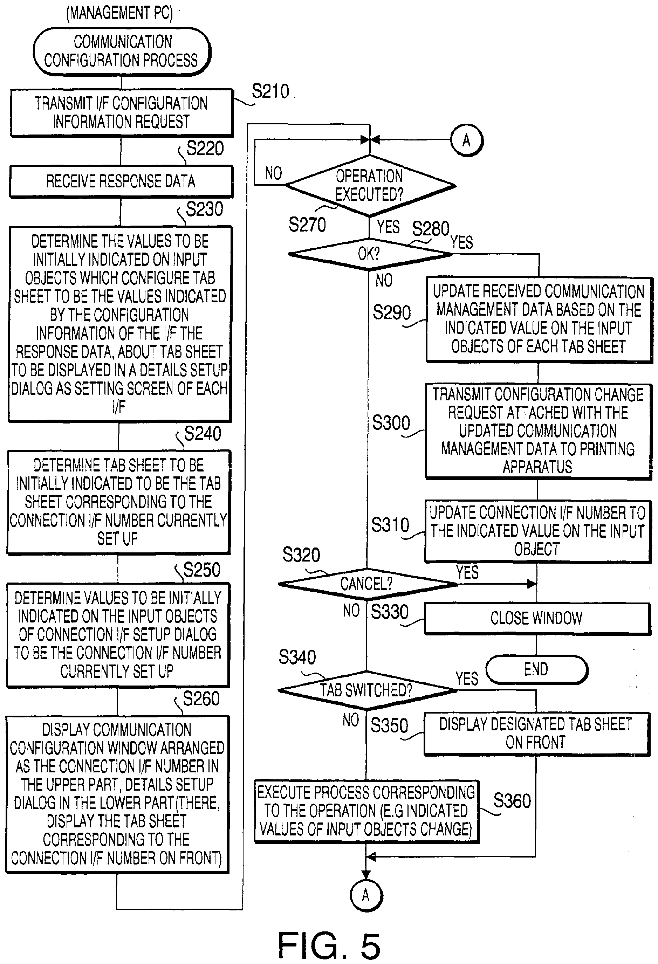

Fig. 5 is a flowchart showing a communication configuration process to be executed by the CPUs 31 of the management PCs 30a, 30b according to the first aspect of the present invention. As the communication configuration process starts, the CPU 31 transmits an I/F configuration information request to the printing apparatus 50 via one of the wireless LAN I/F 39a and the wired LAN I/F 39b (S210) and receives the response data (a response) responding to the request (S220). In this aspect, since a broadcast packet is canceled by the function of the router 10, the management PC 30a in the first network NT1 cannot search the printing apparatus 50 (i.e., the wired LAN I/F 59b) in the network NT2 by the SNMP packet (the broadcast packet), while the management PC 30b in the second network NT2 cannot search the printing apparatus 50 (i.e., the wireless LAN I/F 59a) in the first network NT1 by the SNMP packet (the broadcast packet). Therefore, in the present aspect, the I/F configuration information request is not transmitted from the management PC 30a in the first network NT1 to the printing apparatus 50 via the second network NT2. Similarly, the I/F configuration information request is not transmitted from the management PC 30b in the second network NT2 to the printing apparatus 50 via the first network NT1. This means, the respective PCs 30a, 30b communicate with the printing apparatus 50 within the network to which each of the PCs 30a, 30b belongs (i.e., the first network NT1 or the second network NT2) in S210-S220.

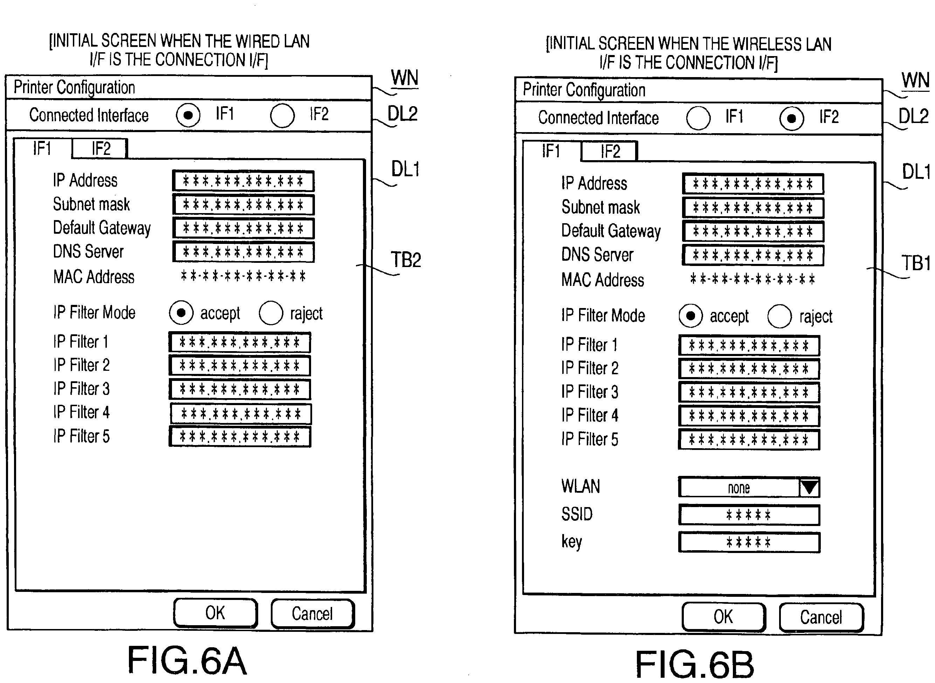

Following S220, the CPU 31 determines a values to be initially indicated on each input object (e.g. a text box, a radio button, and a pull-down menu) in tab sheets TB1, TB2 (see Figs. 6A, 6B), which serve as setting screens for each of the wireless LAN I/F 59a and the wired LAN 59b (S230). In this step, the values of communication management data DT, which are contained in the response data, are determined to be the values to be initially indicated in the input objects.

Figs. 6A, 6B are illustrative diagrams showing a communication configuration window WN according to the first aspect of the present invention. As shown in Figs. 6A, 6B, the communication configuration window WN displayed in response to a display instruction as described above on the display unit 37 in 260 has the tab sheets TB1, TB2 for each of the wireless LAN I/F 59a and the wired LAN I/F 59b respectively in a details setup dialog DL.

Following S230, the CPU 31 proceeds to S240 and determines the tab sheet (either the tab sheet TB1 for the wireless LAN I/F 59a or TB2 for the wired LAN I/F 59b) that is to be initially shown on front in the details setup dialog DL1. In this step, the tab sheet corresponding to the connection I/F number which is currently set up (i.e., the connection I/F number stored in the HDD34) is determined to be the tab sheet to be initially shown on front.

Following S240, the CPU 31 determines values to be initially indicated in the input objects, which are included in a connection I/F setup dialog DL2 and arranged in an upper part of the communication configuration window WN. In this step, the connection I/F number that is currently set up in the HDD34 is determined to be the values to be initially indicated in the input objects (S250). Specifically, if the input objects are radio buttons, the values to be initially indicated on the input objects are determined to be the connection I/F number that is currently set up by specifying in S250 the radio button that corresponds to the connection I/F number currently being set up.

Thereafter, the CPU 31 proceeds to S260 and displays the communication configuration window WN on the display unit 37 with the connection I/F setup dialog DL2 in the upper and the details setup dialog DL1 in the lower part. The connection I/F setup dialog DL2 is configured to accept an updating operation for the connection I/F number from the user, and the details setup dialog DL 1 is provided with the tab sheets TB1, TB2 for the wireless LAN I/F 59a and the wired LAN I/F 59b respectively. The tab sheets TB1, TB2 are configured to accept an updating operation for the configuration information of I/Fs from the user. In this step, according to the determination as described above, the CPU 31 displays the details setup dialog DL1 in the communication configuration window WN with the tab sheet of the I/F which corresponds to the connection I/F number being laid on front.

In S260, when a connection I/F number stored in the HDD 34 indicates the wired LAN I/F 59b, for example, the CPU 31 displays the communication configuration window WN as shown in Fig. 6A on the display unit 37.

Specifically, the connection I/F setup dialog DL2 with the radio button "IF1" which corresponds to the wired LAN I/F 59b, being specified and the other radio button "IF2" which corresponds to the wireless LAN I/F 59a, being left unspecified is displayed in the upper part of the communication configuration window WN.

Additionally, the details setup dialog DL1 with the tab sheet TB2 for setting up the wired LAN I/F 59b being laid on front is displayed in the lower part of the communication configuration window WN. The tab sheet TB 2 includes text boxes for setting the IP address, the subnet mask, the default gateway, and the DNS address, the MAC address of the wired LAN I/F 59b, the radio buttons for setting the IP filter mode, and other text boxes for setting the IP filter targeted addresses, which indicate the currently setup values related to the wired LAN I/F 59b,.

In S260, when a connection I/F number stored in the HDD 34 indicates the wireless LAN I/F 59a, the CPU 31 displays the communication configuration window WN as shown in Fig. 6B on the display unit 37.

Specifically, the connection I/F setup dialog DL2 with the radio button "IF1" which corresponds to the wired LAN I/F 59b being left unspecified and the other radio button "IF2" which corresponds to the wireless LAN I/F 59a being specified is displayed in the upper part of the communication configuration window WN.

Additionally, the details setup dialog DL1 with the tab sheet TB1 for setting up the wireless LAN I/F 59a being laid on front is displayed in the lower part of the communication configuration window WN The tab sheet TB 1 includes text boxes for setting the IP address, the subnet mask, the default gateway, and the DNS address, the MAC address of the wireless LAN I/F 59a, the radio buttons for setting the IP filter mode, and other text boxes for setting the IP filter targeted addresses, a pull-down menu for setting ON/OFF of the wireless LAN function, and text boxes for setting SSID and the WEP key which indicate the currently setup values related to the wireless LAN I/F 59a.

Following S260, the CPU 31 proceeds to S270 and stands by until an operation to the communication configuration window WN from the user through the operating unit 35 is executed. When the operation is executed (S270: YES), the CPU 31 judges as to whether the operation was pressing operation of an "OK" button for transmitting the I/F configuration change request arranged in a bottom part of the communication configuration window WN (S280), and if it is judged that the pressing operation of "OK" button (S280: YES), the process proceeds to S290. If it is judged that the operation was not the pressing operation of "OK" button (S280: NO), the process proceeds to S320.

In S290, the CPU 31 updates each value indicated in the received communication management data DT to the value set in the input objects in one of the tab sheets TB1 and TB2 in the details setup dialog DL1. Thus, by transmitting the I/F configuration change request with the updated communication management data DT to the printing apparatus 50, the configuration information of each I/F provided in the printing apparatus 50 is updated (S300).

Following S300, the CPU 31 proceeds to S310 and updates the connection I/F number stored in the HDD 34 to the value set in the input objects in the connection I/F setup dialog DL2. Thus, the CPU 31 executes configuration change of the connection I/F number by this operation. Thereafter, the CPU 31 proceeds to S330.

On the other hand, in S320, the CPU 31 judges as to whether the operation to this communication configuration window WN was pressing operation of "Cancel" button arranged in the bottom part of the communication configuration window WN, and if it is judged that the operation was a pressing operation of "Cancel" button (S320: YES), the CPU 31 proceeds to S330. Thus, in S330, the CPU 31 closes the displayed communication configuration window WN, and terminates this communication configuration process.

In S320, if it is judged that the operation to the communication configuration window WN was not the pressing operation of "Cancel" button (S320: NO), the CPU 31 proceeds to S340 and judges as to whether the executed operation was the display switching operation of the tab sheets TB1, TB2. If the executed operation is judged to be the display switching operation of the tab sheets TB1, TB2 (S340: YES), the CPU 31 updates the screen of the details setup dialog DL1 through the operating unit 35, so that the tab sheet TB, which is designated by the user to be displayed on front (S350). Thereafter, the process proceeds to S270.

In addition, in S340, if it is judged that the executed operation was not the display switching operation of the tab sheets TB1, TB2 (S340: NO), the CPU 31 executes a process which corresponds to the operation executed on this communication configuration window WN (S360). Specifically, if the input objects were modified, the values indicated by the input objects (values set in the input objects) are changed according to the modification. Thus, after the end of the process in S360, the process proceeds to S270.

Hereinabove, the communication system 1 in the first aspect has been described. According to this communication system 1, the printing apparatus 50 is provided with a plurality of I/Fs 59a, 59b and stores the configuration information which determines the operation of each I/F in the MIB 54a. When the printing apparatus 50 receives the I/F configuration information request from one of the management PCs 30a, 30b via either of I/Fs 59a, 59b, the printing apparatus 50 reads out the communication management data DT which indicates configuration information of each I/F stored in the MIB 54a, and transmits the data to the request source, one of the management PCs 30a and PC 30b via either of I/F 59a or I/F 59b which was applied to receive the request in S150.

Meanwhile, when the display instruction of the communication configuration window WN is inputted by the user through the operating unit 35, one of the management PCs 30a, 30b transmits the I/F configuration information request to the printing apparatus 50, while receives the communication management data DT as the response data from the printing apparatus 50. Following the process, one of the tab sheets TB1 and TB2 is displayed of each I/F switchably according to the instruction of the user on the details setup dialog DL1 in S230-S260 process, wherein one of the tab sheets TB1 and TB2 includes the configuration information of each I/F that is stored in the MIB 54a of the printing apparatus 50 based on the received communication management data DT, and the configuration information of each I/F stored in the MIB 54a is acceptable of updating operation by one of the tab sheets TB1 and TB2 of each I/F.

Additionally, each of the management PCs 30a, 30b according to the first aspect stores the connection I/F numbers in the HDD 34 as identification information of the I/F for the tab sheets TB1, TB2 to be displayed preferentially, and updates the connection I/F numbers stored in the HDD 34 to the I/F number instructed by the user through the connection I/F setup dialog DL2. Further, in S250, by determining the tab sheet TB1 or TB2 for the I/F corresponding to the connection I/F numbers stored in the HDD 34 to be the tab sheet TB1 or TB2 which is to be initially displayed on front, the tab sheet TB1 or TB2 which corresponds to the I/F instructed by the user among a plurality of I/Fs 59a, 59b provided in the printing apparatus 50 is displayed preferentially on the details setup dialog DL1, in S260.

Furthermore, the management PCs 30a, 30b change the setup values (indicated values) of the input objects according to the operation to the tab sheets TB1, TB2 by the user, and if the "OK" button is pressed, the management PCs 30a, 30b change each value of the communication management data DT to the value corresponding to the changed setup value of the input objects, and transmit them with the I/F configuration change request to the printing apparatus 50. Therefore, the management PCs 30a, 30b update the communication management data DT stored in the MIB 54a (the configuration information of each of the I/Fs). Specifically, when the printing apparatus 50 receives the I/F configuration change request from one of the management PCs 30a and 30b via either the wireless LAN I/F 59a or the wired LAN I/F 59b (S160: YES), the printing apparatus 50 rewrites the communication management data DT stored in the MIB 54a based on the communication management data DT contained in the request.

Thus, the communication system 1 according to the first aspect displays the setting screen of I/F (i.e., the tab sheet TB1 or TB2) which is designated by the user among the setting screens of each I/F (the tab sheet TB1 or TB2) which can be checked and change the configuration information preferentially on the communication configuration window WN, therefore, the user can conduct operations such as configuration check operation and configuration change operation easily without a selecting operation of the tab for calling up a desired I/F's tab sheet each time calling up the communication configuration window WN by designating the I/F, which is used frequently for configuration check and configuration change. Thus, the communication system 1 according to the present embodiment enhances operability for the users involved in the operations such as configuration check operation and configuration change operation.

In the present aspect, the I/F to be accessed by the management PCs 30a, 30b, which is one of the wireless LAN I/F 59a and the wired LAN I/F 59b equipped to the printing apparatus 50, is assumed to be designated by the user as the connection I/F. When such designation is given, a tab sheet related to the I/F that relays communication between the management PCs 30a, 30b and the printing apparatus 50 is displayed preferentially in the details setup dialog DL1.

Additionally, in the present aspect, the communication system 1 is enabled set a connection I/F number for each management PC 30a and PC 30b, therefore, in case of managing the printing apparatus 50a with plurality of PCs 30a, 30b, the most essential screen (the tab sheet TB1 or TB2) can be displayed for each management PC 30a and PC 30b preferentially.

Thus far, in the present aspect, the communication system 1 wherein the connection I/F is designated by the user has been described, however, the communication system 1 also may be configured such that the I/F relays communication between the management PCs 30a, 30b, and the printing apparatus 50 is detected automatically so that the tab sheet TB1 or TB2 related to the I/F may be displayed preferentially in the details setup dialog DL1.

### Second Aspect

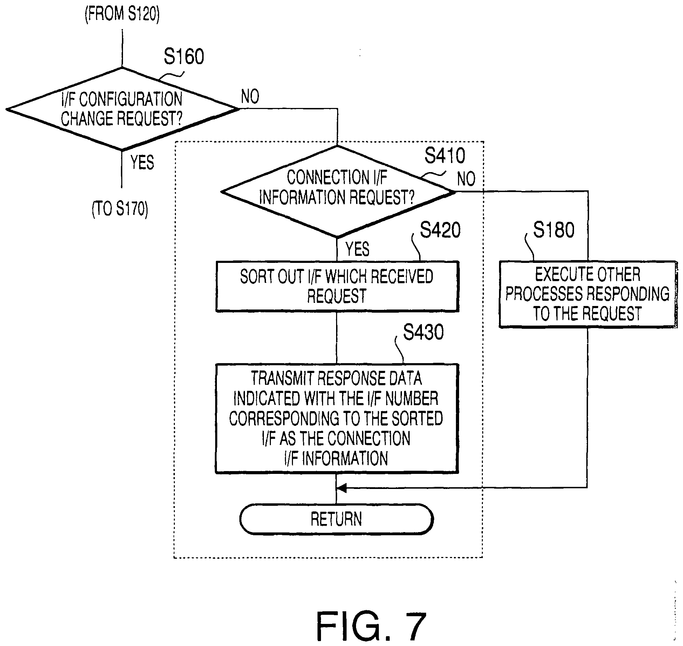

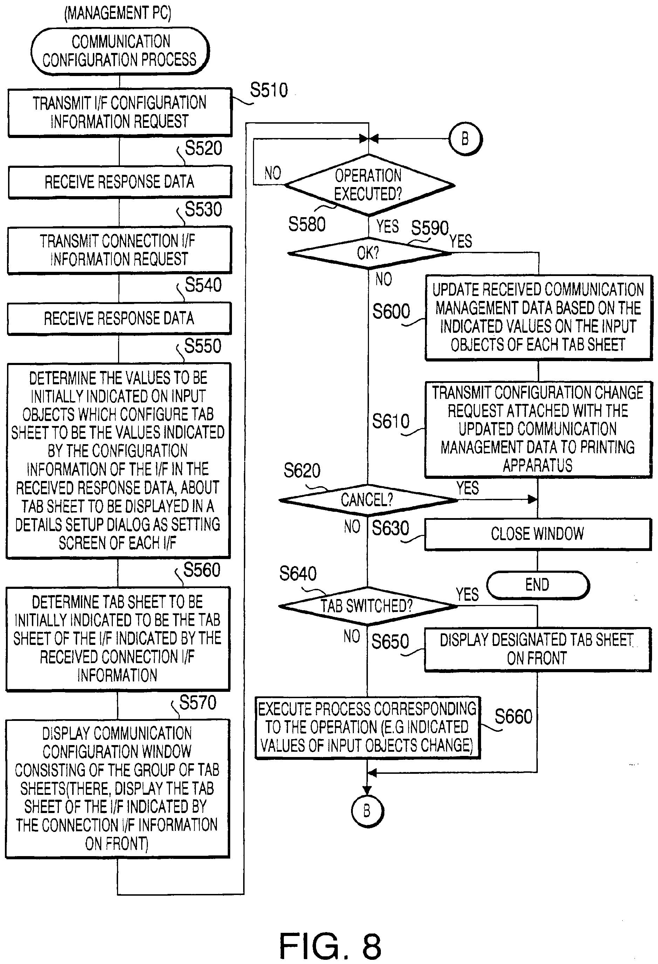

Fig. 7 is a flowchart showing a request acceptance process to be executed repeatedly by a CPU 51 of a printing apparatus 50 in a communication system 2 according to a second aspect of the present invention. Fig. 8 is a flowchart showing a communication configuration process to be executed by a CPU 31 of management PCs 30a, 30b in the communication system 2 according to the second aspect of the present invention.

The communication system 2 in the present aspect has similar configuration to the communication system 1 in the previous aspect except that the connection I/F numbers are not stored in the HDD 34 in the management PCs 30a, 30b, the operations in the request acceptance process which are executed by the CPU 51 in the printing apparatus 50 differ from those in the previous embodiment. Further, the operations in the communication configuration process which are executed by the CPU 31 in the management PCs 30a, 30b differ from that in the previous aspect. It should be noted that in the present and the following embodiments, a configuration of the communication system which is similar to the configuration of the previous aspect is referred to by an identical reference numeral, and description of that will be omitted.

Referring to Fig. 7, a request acceptance process which is executed by the CPU 51 in the printing apparatus 50 will be described. The request acceptance process according to the second aspect is provided with steps indicated by a dotted frame in Fig. 7 on the flow path in-between S160 and S180 shown in Fig. 3.

Specifically, as the request acceptance process starts, the CPU 51 executes the process of S110-S170, which are similar to those in the request acceptance process in the first embodiment. If the received request is neither an I/F configuration information request nor an I/F configuration change request, the CPU 51 judges as NO in S160, and the process proceeds to S410.

In S410, the CPU 51 judges as to whether the received request is a connection I/F information request for requesting information of the I/F, which relays communication between the request source and the printing apparatus 50. If the CPU 51 judges that the received request is a connection I/F information request (S410: YES), the process proceeds to S420. On the other hand, if the CPU 51 judges that the received request is not a connection I/F information request (S410: NO), the CPU 51 executes the process in S180, and the process proceeds to S110.

In S420, the CPU 51 determines the I/F that received the connection I/F information request from the wireless LAN I/F 59a and the wired LAN I/F 59, and terminates the process, then creates response data containing the I/F number which is assigned to the determined I/F as the a connection I/F information in S430. Also in S430, the created response data (a response) is transmitted to the request source, the management PCs 30a, 30b via the I/F that received the connection I/F information request, and thereafter, the process proceeds to S110.

Next, referring to Fig. 8, a communication configuration process which is executed by the CPU 31 of the management PCs 30a, 30b according to the second aspect will be described. As the communication configuration process starts, first, the CPU 31 transmits the I/F configuration information request to the printing apparatus 50 via one of the wireless LAN I/F 39a and the wired LAN I/F 39b (S510), and receives the response data (the response) to the request from the printing apparatus 50 (S520). Following S520, the CPU 31 transmits the connection I/F information request to the printing apparatus 50 via one of the wireless LAN I/F 39a and the wired LAN I/F 39b (S530), and receives the response data which contains aforementioned connection I/F information as the response data to the request (S540).

Following S540, the CPU 31 determines values to be initially indicated in the input objects, which are respectively included in the aforementioned tab sheet TB1, TB2. In this step, the values which are indicated in the communication management data DT contained in the received response data is determined to be the values to be initially indicated in the input objects (S550). Thereafter, as the CPU 31 determines the tab sheet TB1 or TB2 for the wireless LAN I/F 59a and the wired LAN I/F 59b to be the tab sheet TB1 or TB2 which is to be initially displayed on front in the details set up dialog DL1, the tab sheet TB1 or TB2 which corresponds to the I/F number which is indicated in the response data received in S540 as the connection I/F information (S560).

Following S560, the CPU 31 proceeds to S570 and displays the communication configuration window WN having the details setup dialog DL1, which includes the tab sheets TB1, TB2 for each I/F which is adapted to accept an updating operation of the configuration information, on the display unit 37 as shown in Figs. 6A, 6B. In this case, the details setup dialog DL1 is displayed on the communication configuration window WN according to the determinations above, wherein the details setup dialog DL1 is provided with the tab sheet TB1 or TB2 for the I/F corresponding to the I/F number, which is indicated by the connection I/F information, is displayed on front. However, unlike the first aspect, the connection I/F setup dialog DL2 is not displayed in the communication configuration window WN in the present aspect. In other words, the communication configuration window WN of the present aspect is displayed without the connection I/F setup dialog DL2 on the display unit 37.

Following S570, the CPU 31 proceeds to S580, and stands by until any operation to the communication configuration window WN through the operating unit 35is executed. When the operation is executed (S580: YES), the CPU 31 judges as to whether the operation was a pressing operation of "OK" button for the I/F configuration change request transmission that is arranged in a bottom part of the communication configuration window WN (S590), and if it is judged that the operation was the pressing operation of "OK" button (S590: YES), the process proceeds to S600. On the other hand, if it is judged that the operation was not the pressing operation of "OK" button (S590: NO), the process proceeds to S620.

In S600, the CPU 31 updates each indicated value of the received communication management data DT to the value set in the input objects including tab sheets TB1 and TB2 of the details setup dialog DL1, and transmits the I/F configuration change request with the updated communication management data DT to the printing apparatus 50, the configuration information of each I/F provided in the printing apparatus 50 is updated (S610). Thereafter, the process proceeds to S630.

In S620, the CPU 31 judges as to whether an operation on this communication configuration window WN was the pressing operation of "Cancel" button provided in the bottom part of the communication configuration window WN, and if it is judged that the operation was the pressing operation of "Cancel" button (S620: YES), the process proceeds to S630. In S630, the CPU 31 closes the displayed communication configuration window WN, and terminates the communication configuration process.

On the other hand, in S620, if the operation on the communication configuration window WN is judged not to be the pressing operation of "Cancel" button (S620: NO), the CPU 31 proceeds to S640, and judges as to whether the executed operation was a display switching operation of the tab sheets TB1, TB2. If the executed operation is judged to be the display switching operation of the tab sheets TB1, TB2 (S640: YES), the CPU 31 updates the screen of the details setup dialog DL1 through the operating unit 35, so that one of the tab sheets TB 1 and TB2 which is designated by the user to be displayed on front (S650). Thereafter, the process proceeds to S580.

Meanwhile, if the aforementioned operation is judged not to be the display switching operation of the tab sheets TB1, TB2 (S640: NO), similarly to the process in S360, the CPU 31 executes a process which corresponds to the operation executed on the communication configuration window WN (S660). Thereafter, the process proceeds to S580.

Hereinabove, the communication system 2 in second aspect has been described. According to the communication system 2, when the printing apparatus 50 receives the connection I/F information request, the CPU 51 determines the I/F that received the request (S420), and responds accompanying the determined I/F number to the request source, (i.e., the management PCs 30a, 30b), and thereafter displays preferentially the setting screen (i.e., the tab sheet TB1 or TB2) of the I/F which relays communication to the printing apparatus 50 on the request source (i.e., the management PCs 30a, 30b) in the details setup dialog DL1.

Since the setting screen (i.e., the tab sheet TB1 or TB2) which relates communication with the management PCs 30a, 30b as the operation objects and the printing apparatus 50 may be considered the most essential screen for the user operating the management PCs 30a, 30b, displaying the tab sheet of the I/F that relays the communication with the management PCs 30a, 30b and the printing apparatus 50 preferentially, like the communication system 2 according to the present aspect, can reduce operation steps for the display switching operation of the tab sheets TB1, TB2 required for configuration check and configuration change operations than in a conventional configuration. Thus, the communication system 2 according to the present aspect enhances operability for users involved in the operations such as configuration check operation and configuration change operation.

Additionally, in the aforementioned embodiment, it is necessary to install a dedicated software in the PCs 30a, 30b to achieve the communication configuration process, however, by installing a web sever function in the printing apparatus 50 instead, a similar function to the aforementioned communication system 2 can be achieved without installing the dedicated software in the PCs 30a, 30b. An example of such a configuration will be described in the following embodiment.

### Embodiment

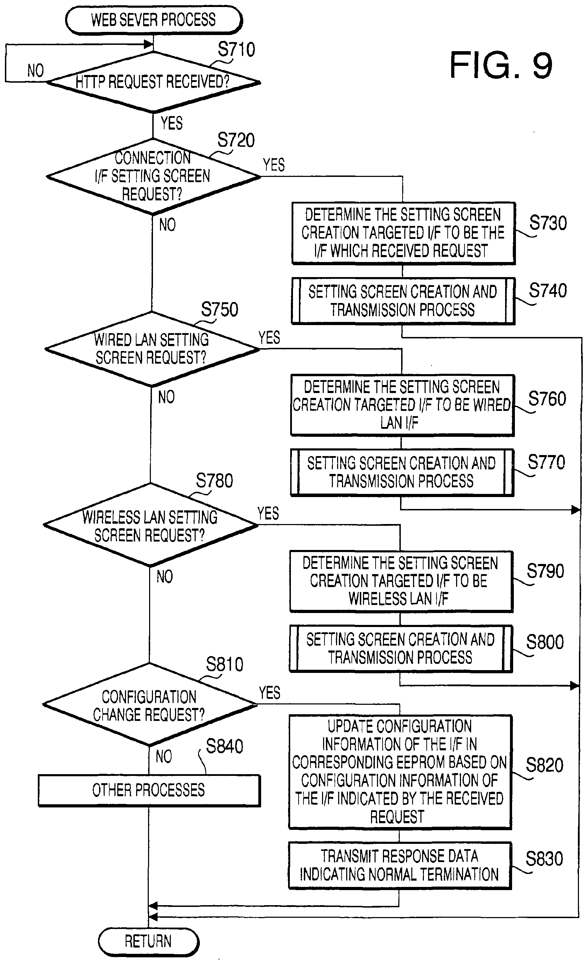

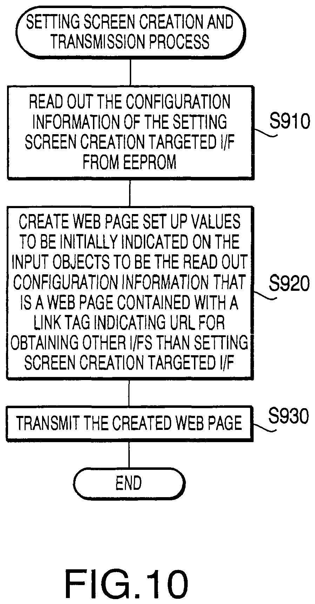

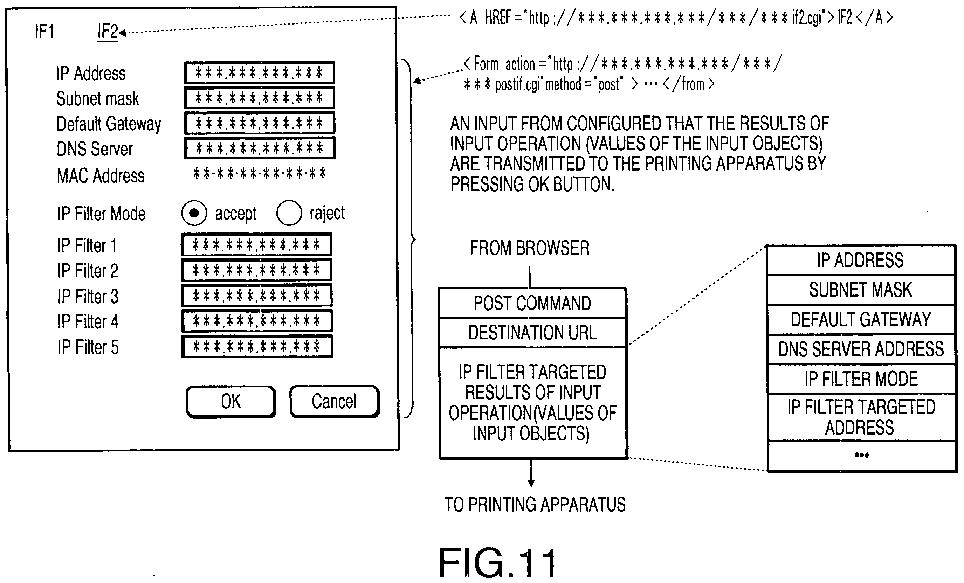

Next, referring to Fig. 9, a web server process executed by a CPU 51 of a printing apparatus 50 according to an embodiment of the invention will be described. Fig. 9 is a flowchart showing the web server process to be executed repeatedly by the CPU 51 of the printing apparatus 50 according to the embodiment of the invention. Fig. 10 is a flowchart showing a setting screen creation transmission process to be executed by the CPU 51 of the printing apparatus 50 according to the embodiment of the invention. Fig. 11 is an illustrative diagram showing a configuration of a web page to be transmitted in the web server process according to the embodiment of the invention.

The communication system 3 according to the embodiment has a system configuration as shown in Fig. 1, similarly to the aforementioned first and second aspects. Additionally, a characteristic unique to the present embodiment is that software called "browser" being capable of displaying a web page correctly is included in each PC 30a and 30b which functions as a management PC.

Further, the printing apparatus 50 according to the present embodiment has a program which allows the printing apparatus 50 to function as a web sever in the ROM 52 so that the CPU 51 controls the printing apparatus 50 as a web sever by executing the program. As for the rest, in the third embodiment, the user (an administrator) of the management PCs 30a, 30b is informed of a URL (Uniform Resource Locator) concerning the web page which configures the connection I/F setting screen being mentioned hereinafter.

Specifically, in the communication system 3 according to the embodiment, when the user of the management PCs 30a, 30b designates the aforementioned URL and inputs a web page acquisition command in the browser, an HTTP (Hyper Text Transport Protocol) request for requesting the web page which configures the connection I/F setting screen is transmitted from the management PCs 30a, 30b to the printing apparatus 50.

When the printing apparatus 50 receives the request, the CPU 51 processes the request by the web sever process shown in Fig. 9. Thus, the printing apparatus 50 executes the aforementioned web server process in the CPU 51 repeatedly immediately after activation.

When the web sever process starts according to the program stored in the ROM 52, the CPU 51 stands by until it receives an HTTP request (GET request or POST request) transmitted externally via one of the wireless LAN I/F 59a or the wired LAN I/F 59b (S710). If the CPU 51 received any HTTP request, it judges as to whether the received HTTP request is for requesting the web page which configures the connection I/F setting screen (S720).

In this step, if the received HTTP request is judged to be the aforementioned request concerning the web page, which configures the connection I/F setting screen (S720: YES), the CPU 51 proceeds to S730 and determines that one of the wireless LAN I/F 59a and the wired LAN I/F 59b which received the aforementioned HTTP request is a setting screen creation object I/F and executes a setting screen creation process as shown in Fig. 10 (S740).

When the setting screen creation process starts, the CPU 51 reads out the configuration information of the I/F, which was determined to be the setting screen creation object I/F, from an EEPROM 54 (S910), and based on the configuration information, the CPU 51 creates the web page that includes the setting screen to accept an updating operation of the configuration information of the I/F, which was determined to be the setting screen creation object I/F (S920).

Specifically, in S920, the CPU 51 creates the web page as shown in Fig. 11 The web page shown in Fig. 11 is a web page to be created when the setting screen creation object I/F is the wired LAN I/F 59b.

More specifically, when the setting screen creation object I/F is the wired LAN I/F 59b, the CPU 51 creates a web page for setting the wired LAN I/F 59b in 920, wherein each text box for setting an IP address set up with the currently setup value indicated as the configuration information of the wired LAN I/F 59b as the initial value (the indicated value), the subnet mask, the default gateway, the DNS address, and the MAC address of the wireless LAN I/F 59a, the radio buttons for setting the IP filter mode set up with the currently setup mode as the initial value, and other text boxes for setting the IP filter targeted addresses set up with the current IP filter targeted addresses as the initial values are provided.

Additionally, in case of creating the web page, an "OK" button that enables transmitting the POST request (hereinafter, also referred to as "the configuration change request") including the value set up in each of the aforementioned input objects (e.g. text box, radio button) is added in the bottom part of the web page. Further, a "Cancel" button which enables resetting the value set up in each of the input objects included in the web page to the initial value is added in the bottom part of the web page.

Furthermore, in case of creating the web page, a character string "IF1" which indicates that the current web page is for setting the wired LAN I/F 59b, and link information (link tag) concerning the web page included in the setting screen (the wireless LAN setting screen) for the other I/F (i.e., the wireless LAN I/F 59a) being incapable of setting within the web page are added in the top part of the web page. Thus, the CPU 51 creates the web page shown in Fig. 11, when the setting screen creation object I/F is the wired LAN I/F 59b.

On the other hand, when the setting screen creation object I/F is the wireless LAN I/F 59a, the CPU 51 creates a web page for setting the wireless LAN I/F 59a in 920, wherein each text box for setting an IP address set up with the currently setup value indicated as the configuration information of the wireless LAN I/F 59a as the initial value (the indicated value), the subnet mask, the default gateway, the DNS address, and the MAC address of the wireless LAN I/F 59a, the radio buttons for setting the IP filter mode set up with the currently setup mode as the initial value, and other text boxes for setting the IP filter targeted addresses set up with the current IP filter targeted addresses as the initial values, a pull-down menu for setting ON/OFF for the wireless LAN function set up with the currently setup mode as the initial value, and each text box for setting SSID and the WEP key are provided.

Other than those above, in case of creating the web page, similarly to the case that the setting screen creation object I/F is the wired LAN I/F 59b, an "OK" button for the configuration change request transmission, and an "Cancel" button for reset, are added in the bottom part of the web page. Also in case of creating the web page, a character string "IF2" which indicates that the current web page is for setting the wireless LAN I/F 59a, and link information (link tag) concerning the web page included in the setting screen for the other I/F (i.e. the wired LAN I/F 59b) being incapable of setting within the web page are added in the top part of the web page. Thus, the CPU 51 creates the web page having a similar form to the details setup dialog DL1 shown in Fig. 6B, when the setting screen creation object I/F is the wireless LAN I/F 59a.

Meanwhile, following S920, the CPU 31 proceeds to S930, and transmits the aforementioned created web page to the request source, that is the management PCs 30a, 30b, via the I/F that received the request. Thereafter, the CPU 31 terminates the setting screen creation transmission process.

Thus, in this way, following the setting screen creation transmission process in S740, the CPU 51 proceeds to S710 and stands by until it receives the next transmitted HTTP request. Subsequently, if the CPU 51 judges that the received HTTP request was not the aforementioned request concerning the web page included in the connection I/F setting screen (S720: NO), the CPU 51 proceeds to S750, and judges as to whether the received HTTP request is for requesting the web page included in the wired LAN setting screen. The request is transmitted from the management PCs 30a, 30b based on one of the link information added to the web page included in the connection I/F setting screen and the link information added to the web page included in the wireless LAN setting screen.

In S750, if the received HTTP request is judged to be the aforementioned request concerning the web page included in the wired LAN setting screen (S750: YES), the CPU 51 proceeds to S760, and sets the setting screen creation object I/F to the wired LAN I/F 59b. Thereafter, in S770, the CPU 51 executes the setting screen creation process as described above (see Fig. 10), so that the configuration information related to the wired LAN I/F 59b is indicated, and the web page included in the wired LAN setting screen to accept an updating operation related to the configuration information is transmitted to the request source, that is the management PCs 30a, 30b. Thereafter, the CPU 51, proceeds to S710.

If the received HTTP request is judged not to be the aforementioned request concerning the web page included in the wired LAN setting screen (S750: NO), the CPU 51 proceeds to S780, and judges as to whether the received HTTP request is for requesting the web page included in the wireless LAN setting screen. The request is transmitted from the management PCs 30a, 30b based on one of the link information added to the web page included in the connection I/F setting screen and the link information added to the web page included in the wired LAN setting screen.

In S780, if the received HTTP request is judged to be the aforementioned request concerning the web page included in the wireless LAN setting screen (S780: YES), the CPU 51 proceeds to S760, and sets the setting screen creation object I/F to the wireless LAN I/F 59a. Thereafter in S800, the CPU 51 executes the setting screen creation process as described above (see Fig. 10), so that the configuration information related to the wireless LAN I/F 59a is indicated, and the web page included in the wireless LAN setting screen to accept an updating operation related to the configuration information is transmitted to the request source, that is the management PCs 30a, 30b. Thereafter, the CPU 51, proceeds to S710.

Yet more, if the received HTTP request is judged not to be the aforementioned request concerning the web page included in the wireless LAN setting screen (S780: NO), the CPU 51 proceeds to S810, and judges as to whether the received HTTP request is the configuration change request transmitted from the management PCs 30a, 30b according to the pressing operation of "OK" button.

If the received HTTP request is judged to be the aforementioned configuration change request (S810: YES), the CPU 51 updates the configuration information of the corresponding I/F that is stored in the EEPROM 54, based on the aforementioned setup values of the input objects indicated by the request. In the configuration change request, as well as the setup values of the input objects, the I/F number indicating the configuration information of the object of updates is included. Such an operation is achieved by writing the I/F number related to the setting screen creation object I/F to the web page as hidden data in the process in S920. Thereafter, the CPU 51 proceeds to S830, then transmits response data (a response) informing normal termination of the configuration change to the request source, that is the management PCs 30a, 30b. Thereafter, the process proceeds to S710.

If the received HTTP request is judged not to be the aforementioned configuration change request (S810: NO), the CPU 51 proceeds to S840, and executes other processes corresponding to the received request. Thereafter, the process proceeds to S710.

Hereinabove, the communication system 3 in the embodiment has been described. According to the communication system 3, when the printing apparatus 50 received the predetermined HTTP request from the management PCs 30a, 30b, the printing apparatus 50 sets up each parameter value indicated in the configuration information of the I/F that received the HTTP request among the configuration information of each the I/F 59a and I/F 59b stored in the EEPROM 54, as the initial value (the indicated value) for the configuration information updating operation, and creates a web page included in the setting screen of the I/F to accept an updating operation. Thereafter, the printing apparatus 50 transmits the created web page to the request source, that is the management PCs 30a, 30b.

Also, when the printing apparatus 50 receives the aforementioned configuration change request, which is an instruction to update the configuration information from the management PCs 30a, 30b, from the user through the web page, the printing apparatus 50 updates the configuration information of the I/F stored in the EEPROM 54 according to the setup values of the input objects.

Thus, the communication system 3 according to the embodiment, the setting screen indicating the current configuration information for the updating operation is displayed in the web page, it is unnecessary to install any dedicated software in the PCs 30a, 30b to display the setting screen. Therefore, the user can operate configuration check and configuration change on each of the I/Fs 59a, 59b easily by using the printing apparatus 50.

Further, according to the embodiment, the most essential setting screen of I/F for the connection I/F can be displayed on each of the management PCs 30a and PC 30b preferentially between each setting screen on the wireless LAN I/F 59a and the wired LAN I/F 59b, therefore the user can display the setting screen related to the object I/F for configuration check and change on the display unit 37 by only transmitting the request from the management PCs 30a, 30b without designating the I/F. Thus, the communication system 3 according to the present embodiment can improve operability on configuration check and configuration change.

Although examples of carrying out the invention have been described, those skilled in the art will appreciate that there are numerous variations and permutations of the communication system that fall within the scope of the invention as set forth in the appended claims. It is to be understood that the subject matter defined in the appended claims is not necessarily limited to the specific features or act described above. Rather, the specific features and acts described above are disclosed as example forms of implementing the claims. For example, although in the embodiment, an equivalent process to the communication system 2 in the second aspect is achieved by using the web sever function, an equivalent process to the communication system 1 in the first aspect may be also achieved by using the web sever function.

Additionally, although the communication system has been described relating to a printing apparatus 50 having the wireless LAN I/F 59a and the wired LAN I/F 59b, the present invention may be applied to a case that the printing apparatus 50 is provided with a plurality of wired LAN I/Fs (39b, 59b) instead of the wireless LAN I/F 59a.

## Claims

1. A peripheral device (50), comprising:
a plurality of interfaces (59a, 59b) for communicating with a host computer (30a, 30b) wherein the host computer is connected to the peripheral device through one of the plurality of interfaces (59b); and
a storing system (54a) arranged to store configuration information, for each of the plurality of interfaces for communicating with a host computer (30a, 30b), which determines an operation of each of the interfaces; and
the peripheral device being **characterised in** comprising:
a configuration information transmission system arranged to, in response to receiving a request signal for the configuration information from the host computer (30a, 30b) is received through one of the plurality of interfaces (59a, 59b), determine the interface that received the request signal, determine that the configuration information for the interface which received the request signal is to be initially displayed, and transmit to the host computer:
the configuration information stored in the storing system of the interface (59b) that received the request signal, and
link information for indicating the configuration information stored in the storing system of an interface (59a) that did not receive the request signal;
wherein the peripheral device further comprises a web server configured to:
receive the request signal from a web browser of the host computer;
read out the configuration information for the one of the plurality of interfaces, through which the peripheral device receives the request signal from the host computer, from the storing system;
create a web page for displaying a setting screen including the the read out configuration information as an initial value on the host computer, the web page also including said link information for acquiring the setting screen of the interface that did not receive the request signal; and
transmit the created web page to the web browser of the host computer.

2. The peripheral device (50), according to claim 1,
wherein the configuration information transmission system is arranged to transmit information configuring a web page, in which the configuration of the interface that received the request signal is described, while the web page is included in a setting screen to accept an updating operation related to the configuration information of the interface that received the request signal, to the host computer (30a, 30b) issuing the request signal for the configuration information through one of the plurality of interfaces (59a, 59b) when the request signal for the configuration information from the host computer is received through one of the plurality of interfaces while the configuration information for each of the plurality of interfaces is stored in the storing system, and
wherein a configuration updating system for rewriting the configuration information stored in the storing system (54a) according to the received instruction signal when the peripheral device (50) receives the update instruction signal from the host computer (30a, 30b) given by the user through the web page is provided in the peripheral device.

3. The peripheral device (50), according to claim 2,
wherein the web page to be transmitted by the configuration information transmission system is provided with said link information to request for a web page which is included in the setting screen related to the other interfaces than the interface corresponding to the configuration information capable of being updated through the web page included in the setting screen; and
the configuration information transmission system is arranged to transmit the web page included in the setting screen to accept an updating operation for updating the configuration information of the interface corresponding to the link information to the host computer (30a/30b) issuing the request signal when the request signal transmitted according to the link information is received by the configuration information transmission system while the web page includes the configuration information for the interface corresponding to the link information.

4. The peripheral device (50), according to any of claim 1 through claim 3,
comprising an interface connected to a wired network and an interface connected to a wireless network as the plurality of the interfaces.

5. A communication system (1), comprising:
at least one peripheral device (50) according to claim 1; and
a host computer (30a, 30b) which is arranged to communicate with the at least one peripheral device (50) through one of the plurality of the interfaces (59a, 59b)
wherein the host computer (30a/30b) comprises:
a web browser;
a configuration information reception system arranged to receive from the configuration information transmission system from the at least one of the peripheral devices (50):
the configuration information stored in the storing system of the interface (59b) that received the request signal; and
link information for indicating the configuration information stored in the storing system of an interface (59a) that did not receive the request signal;
wherein the host computer further comprises a setting screen display system arranged switchably to display, for each of the interfaces, a setting screen with the configuration information in the storing system (54a) being indicated therein, the setting screen being switchable between interfaces according to an instruction from a user;
wherein the communication system further comprises:
a screen display controlling system configured to display the setting screen of one of the interfaces that relays communication between the host computer and the at least one of the peripheral device preferentially among the plurality of interfaces provided to the at least one of the peripheral devices as an initially displayed screen on the setting screen display system;
wherein the host computer is configured to:
receive a web page; and
display the received web page on the web browser; and
receive, in response to receiving an operation to the link information displayed on the web browser, a web page including the configuration information indicated by the link information from the peripheral device.

6. The communication system (1) according to claim 5,
wherein the at least one peripheral device includes an interface connected to a wired network and an interface connected to a wireless network as the plurality of the interfaces.

7. The communication system (1) according to claim 5 or claim 6,
wherein the setting screen is configured to accept an updating operation related to the configuration information being stored in the storing system (54a) of the at least one peripheral device (50);
wherein the host computer (30a/30b) comprises an update instructing system for transmitting an update instruction signal to the at least one peripheral device according to an operation from the user to the setting screen displayed in a display unit by the setting screen display system, the update instruction signal being a signal to indicate updated configuration information for updating the configuration information; and
wherein the at least one peripheral device comprises a configuration updating system for rewriting the configuration information stored in the storing system according to the received instruction signal when the at least one peripheral device receives the update instruction signal from the host computer through any one of a plurality of the interfaces.

8. A computer usable medium comprising computer readable instructions, which when run on a computer having a plurality of interfaces (59a, 59b) for communicating with an external device and a storing system (54a) arranged to store configuration information, for each of the plurality of interfaces, which determines an operation of each of the interfaces are arranged to execute steps of:
determining the interface that received the request signal;
determining that the configuration information for the interface which received the request signal is to be initially displayed;
transmitting the configuration information stored in the storing system of the interface (59b) that received the request signal; and
link information for indicating the configuration information stored in the storing system of an interface (59a) that did not receive the request signal;
receiving the request signal from a web browser of the host computer;
reading out the configuration information for the one of the plurality of interfaces, through which the peripheral device received the request signal from the host computer, from the storing system;
creating a web page for displaying a setting screen including the read out configuration information as an initial value on the host computer, the web page also including said link information for acquiring the setting screen of the interface that did not receive the request signal; and
transmitting the created web page to the web browser of the host computer.

9. The computer usable medium according to claim 8,
wherein the configuration information is arranged to configure a web page, and the web page to be transmitted in the configuration information is provided with link information to request for a web page which is included in the setting screen related to the other interfaces than the interface corresponding to the configuration information capable of being updated through the web page included in the setting screen; and
a step to rewrite the configuration information stored in the storing system (54a) according to the received instruction signal when the computer receives the update instruction signal from the external device given by the user through the web page is included in the steps to be executed by the computer.

10. The computer usable medium according to claim 9
wherein the web page to be transmitted in transmitting the configuration information is provided with said link information to request for a web page which is included in the setting screen related to the other interfaces than the interface corresponding to the configuration information capable of being updated through the web page included in the setting screen; and
wherein the steps executed by the computer includes transmitting the web page included in the setting screen to accept an updating operation for updating the configuration information of the interface corresponding to the link information to the external device issuing the request signal when the request signal transmitted according to the link information is received by the configuration information transmission system while the web page includes the configuration information for the interface corresponding to the link information.

## Patentansprüche

1. Peripherievorrichtung (50), die Folgendes umfasst:
eine Vielzahl von Schnittstellen (59a, 59b) zum Kommunizieren mit einem Hostcomputer (30a, 30b), wobei der Hostcomputer über eine der Vielzahl von Schnittstellen (59b) mit der Peripherievorrichtung verbunden ist; und
ein Speichersystem (54a), das zum Speichern von Konfigurationsinformationen für jede der Vielzahl von Schnittstellen zum Kommunizieren mit einem Hostcomputer (30a, 30b) angeordnet ist, der einen Betrieb jeder der Schnittstellen bestimmt; und
wobei die Peripherievorrichtung **dadurch gekennzeichnet ist, dass** sie Folgendes umfasst:
ein Konfigurationsinformationsübertragungssystem, das für Folgendes ausgelegt ist: als Reaktion auf das Empfangen eines Anforderungssignals für die Konfigurationsinformationen vom Hostcomputer (30a, 30b), das über eine der Vielzahl von Schnittstellen (59a, 59b) empfangen wird, Bestimmen der Schnittstelle, die das Anforderungssignal empfangen hat, Bestimmen, dass die Konfigurationsinformationen für die Schnittstelle, die das Anforderungssignal empfangen hat, anfänglich angezeigt werden sollen, und Übertragen von Folgendem an den Hostcomputer:
Konfigurationsinformationen, die in dem Speichersystem der Schnittstelle (59b) gespeichert sind, die das Anforderungssignal empfangen hat, und
Verknüpfungsinformationen zum Anzeigen der Konfigurationsinformationen, die in dem Speichersystem einer Schnittstelle (59a) gespeichert sind, die das Anforderungssignal nicht empfangen hat;
wobei die Peripherievorrichtung ferner einen Webserver umfasst, der für Folgendes konfiguriert ist:
Empfangen des Anforderungssignals von einem Webbrowser des Hostcomputers;
Auslesen der Konfigurationsinformationen für eine der Vielzahl von Schnittstellen, über die die Peripherievorrichtung das Anforderungssignal von dem Hostcomputer empfängt, aus dem Speichersystem;
Erstellen einer Webseite zum Anzeigen eines Einstellungsbildschirms mit den ausgelesenen Konfigurationsinformationen als Anfangswert auf dem Hostcomputer, wobei die Webseite auch die Verknüpfungsinformationen zum Erhalten des Einstellbildschirms der Schnittstelle umfasst, die das Anforderungssignal nicht empfangen hat; und
Übertragen der erstellten Webseite an den Webbrowser des Hostcomputers.

2. Peripherievorrichtung (50) nach Anspruch 1,
wobei das Konfigurationsinformationsübertragungssystem dafür ausgelegt ist, Informationen, die eine Webseite konfigurieren, in denen die Konfiguration der Schnittstelle beschrieben wird, die das Anforderungssignal empfangen hat, während die Webseite in einem Einstellbildschirm enthalten ist, um einen Aktualisierungsvorgang zu akzeptieren, der sich auf die Konfigurationsinformationen der Schnittstelle bezieht, die das Anforderungssignal empfangen hat, an den Hostcomputer (30a, 30b) zu übertragen, der das Anforderungssignal für die Konfigurationsinformationen über eine der Vielzahl von Schnittstellen (59a, 59b) ausgibt, wenn das Anforderungssignal für die Konfigurationsinformationen von dem Hostcomputer über eine der Vielzahl von Schnittstellen empfangen wird, während die Konfigurationsinformationen für jede der Vielzahl von Schnittstellen in dem Speichersystem gespeichert sind, und
wobei ein Konfigurationsaktualisierungssystem zum Überschreiben der in dem Speichersystem (54a) gespeicherten Konfigurationsinformationen gemäß dem empfangenen Befehlssignal, wenn die Peripherievorrichtung (50) das Aktualisierungsanweisungssignal vom Hostcomputer (30a, 30b) empfängt, das vom Benutzer über die Webseite ausgegeben wird, in der Peripherievorrichtung bereitgestellt wird.

3. Peripherievorrichtung (50) nach Anspruch 2,
wobei die von dem Konfigurationsinformationsübertragungssystem zu übertragende Webseite mit den Verknüpfungsinformationen versehen ist, um eine Webseite anzufordern, die in dem Einstellungsbildschirm enthalten ist, der sich auf die anderen Schnittstellen als die Schnittstelle bezieht, die den Konfigurationsinformationen entspricht, die durch die Webseite aktualisiert werden können, die im Einstellungsbildschirm enthalten ist; und
das Konfigurationsinformationsübertragungssystem dafür ausgelegt ist, die im Einstellungsbildschirm enthaltene Webseite zu übertragen, eine Aktualisierungsoperation zum Aktualisieren der Konfigurationsinformationen der Schnittstelle zu akzeptieren, die den Verknüpfungsinformationen zu dem Hostcomputer (30a/30b) entspricht, der das Anforderungssignal ausgibt, wenn das Anforderungssignal, das gemäß den Verknüpfungsinformationen übertragen wird, von dem Konfigurationsinformationsübertragungssystem empfangen wird, während die Webseite die Konfigurationsinformationen für die Schnittstelle umfasst, die den Verknüpfungsinformationen entspricht.

4. Peripherievorrichtung (50) nach einem der Ansprüche 1 bis 3,
die Folgendes umfasst: eine Schnittstelle, die mit einem drahtgebundenen Netzwerk verbunden ist, und eine Schnittstelle, die mit einem drahtlosen Netzwerk als die Vielzahl der Schnittstellen verbunden ist.

5. Kommunikationssystem (1), das Folgendes umfasst:
mindestens eine Peripherievorrichtung (50) nach Anspruch 1; und
einen Hostcomputer (30a, 30b), der zur Kommunikation mit der mindestens einen Peripherievorrichtung (50) über eine der Vielzahl der Schnittstellen (59a, 59b) ausgelegt ist, wobei der Hostcomputer (30a/30b) Folgendes umfasst:
einen Webbrowser;
ein Konfigurationsinformationsempfangssystem, das dafür ausgelegt ist, von dem Konfigurationsinformationsübertragungssystem von der mindestens einen der Peripherievorrichtungen (50) Folgendes zu empfangen:
Konfigurationsinformationen, die in dem Speichersystem der Schnittstelle (59b) gespeichert sind, die das Anforderungssignal empfangen hat; und
Verknüpfungsinformationen zum Anzeigen der Konfigurationsinformationen, die in dem Speichersystem einer Schnittstelle (59a) gespeichert sind, die das Anforderungssignal nicht empfangen hat;
wobei der Hostcomputer ferner ein Einstellbildschirmanzeigesystem umfasst, das umschaltbar dafür ausgelegt ist, für jede der Schnittstellen einen Einstellbildschirm anzuzeigen, wobei die Konfigurationsinformationen in dem Speichersystem (54a) darin angegeben sind, wobei der Einstellschirm zwischen Schnittstellen gemäß einer Anweisung von einem Benutzer umschaltbar ist;
wobei das Kommunikationssystem ferner umfasst:
ein Bildschirmanzeigesteuersystem, das zum Anzeigen des Einstellbildschirms einer der Schnittstellen konfiguriert ist, die die Kommunikation zwischen dem Hostcomputer und der mindestens einen der Peripherievorrichtungen bevorzugt zwischen der Vielzahl von Schnittstellen, die an der mindestens einen der Peripherievorrichtungen bereitgestellt sind, als einen anfangs auf dem Einstellbildschirmanzeigesystem angezeigten Bildschirm weiterleiten;
wobei der Hostcomputer für Folgendes konfiguriert ist: Empfangen einer Webseite; und
Anzeigen der empfangenen Webseite in dem Webbrowser; und
Empfangen einer Webseite als Reaktion auf den Empfang einer Operation auf die Verknüpfungsinformationen, die in dem Webbrowser angezeigt werden, die die Konfigurationsinformationen, die durch die Verknüpfungsinformationen von der Peripherievorrichtung angegeben werden, umfasst.

6. Kommunikationssystem (1) nach Anspruch 5,
wobei die mindestens eine Peripherievorrichtung eine Schnittstelle umfasst, die mit einem drahtgebundenen Netzwerk verbunden ist, und eine Schnittstelle, die mit einem drahtlosen Netzwerk als die Vielzahl der Schnittstellen verbunden ist.

7. Kommunikationssystem (1) nach Anspruch 5 oder Anspruch 6,
wobei der Einstellungsbildschirm dafür konfiguriert ist, eine Aktualisierungsoperation in Bezug auf die Konfigurationsinformationen zu akzeptieren, die in dem Speichersystem (54a) der mindestens einen Peripherievorrichtung (50) gespeichert sind;
wobei der Hostcomputer (30a/30b) ein Aktualisierungsanweisungssystem zum Übertragen eines Aktualisierungsanweisungssignals an die mindestens eine Peripherievorrichtung gemäß einer Operation von dem Benutzer am Einstellbildschirm umfasst, die in einer Anzeigeeinheit durch das Einstellbildschirmanzeigesystem angezeigt wird, wobei das Aktualisierungsanweisungssignal ein Signal ist, um aktualisierte Konfigurationsinformationen zum Aktualisieren der Konfigurationsinformationen anzuzeigen; und
wobei die mindestens eine Peripherievorrichtung ein Konfigurationsaktualisierungssystem zum Überschreiben der in dem Speichersystem gespeicherten Konfigurationsinformationen gemäß dem empfangenen Befehlssignal umfasst, wenn die mindestens eine Peripherievorrichtung das Aktualisierungsanweisungssignal von dem Hostcomputer über eine einer Vielzahl von Schnittstellen empfängt.

8. Computerverwendbares Medium, das computerlesbare Anweisungen umfasst, die, wenn sie auf einem Computer ausgeführt werden, der eine Vielzahl von Schnittstellen (59a, 59b) zur Kommunikation mit einer externen Vorrichtung und ein Speichersystem (54a) zum Speichern von Konfigurationsinformationen für jede der Vielzahl von Schnittstellen, die eine Operation von jeder der Schnittstellen bestimmt, dafür ausgelegt sind, folgende Schritte ausführen:
Bestimmen der Schnittstelle, die das Anforderungssignal empfangen hat;
Bestimmen, dass die Konfigurationsinformationen für die Schnittstelle, die das Anforderungssignal empfangen hat, anfänglich angezeigt werden sollen;
Übertragen der Konfigurationsinformationen, die in dem Speichersystem der Schnittstelle (59b) gespeichert sind, die das Anforderungssignal empfangen hat; und
Verknüpfen von Informationen zum Anzeigen der Konfigurationsinformationen, die in dem Speichersystem einer Schnittstelle (59a) gespeichert sind, die das Anforderungssignal nicht empfangen hat;
Empfangen des Anforderungssignals von einem Webbrowser des Hostcomputers;
Auslesen der Konfigurationsinformationen für eine der Vielzahl von Schnittstellen, über die die Peripherievorrichtung das Anforderungssignal von dem Hostcomputer empfangen hat, aus dem Speichersystem;
Erstellen einer Webseite zum Anzeigen eines Einstellungsbildschirms mit den ausgelesenen Konfigurationsinformationen als Anfangswert auf dem Hostcomputer, wobei die Webseite auch die Verknüpfungsinformationen zum Erhalten des Einstellbildschirms der Schnittstelle umfasst, die das Anforderungssignal nicht empfangen hat; und
Übertragen der erstellten Webseite an den Webbrowser des Hostcomputers.

9. Computerverwendbares Medium nach Anspruch 8,
wobei die Konfigurationsinformationen dafür ausgelegt sind, eine Webseite zu konfigurieren, und die in den Konfigurationsinformationen zu übertragende Webseite mit Verknüpfungsinformationen versehen wird, um eine Webseite anzufordern, die im Einstellungsbildschirm enthalten ist, der sich auf die anderen Schnittstellen bezieht, als die Schnittstelle, die den Konfigurationsinformationen entspricht, die über die im Einstellungsbildschirm enthaltene Webseite aktualisiert werden kann; und
wobei ein Schritt zum Überschreiben der in dem Speichersystem (54a) gespeicherten Konfigurationsinformationen gemäß dem empfangenen Befehlssignal, wenn der Computer das Aktualisierungsanweisungssignal von der externen Vorrichtung empfängt, das vom Benutzer über die Webseite ausgegeben wird, in den vom Computer auszuführenden Schritten enthalten ist.

10. Computerverwendbares Medium nach Anspruch 9,
wobei die zu übertragende Webseite beim Übertragen der Konfigurationsinformationen mit den Verknüpfungsinformationen versehen wird, um eine Webseite anzufordern, die in dem Einstellungsbildschirm enthalten ist, der sich auf die anderen Schnittstellen als die Schnittstelle bezieht, die den Konfigurationsinformationen entspricht, die durch die Webseite aktualisiert werden können, die im Einstellungsbildschirm enthalten ist; und
wobei die von dem Computer ausgeführten Schritte Folgendes umfassen: Übertragen der im Einstellungsbildschirm enthaltenen Webseite, um eine Aktualisierungsoperation zum Aktualisieren der Konfigurationsinformationen der Schnittstelle zu akzeptieren, die den Verknüpfungsinformationen zu der externen Vorrichtung entspricht, die das Anforderungssignal ausgibt, wenn das Anforderungssignal, das gemäß den Verknüpfungsinformationen übertragen wird, von dem Konfigurationsinformationsübertragungssystem empfangen wird, während die Webseite die Konfigurationsinformationen für die Schnittstelle umfasst, die den Verknüpfungsinformationen entspricht.

## Revendications

1. Dispositif périphérique (50), comprenant :
une pluralité d'interfaces (59a, 59b) permettant de communiquer avec un ordinateur hôte (30a, 30b), l'ordinateur hôte étant connecté au dispositif périphérique par l'intermédiaire d'une de la pluralité d'interfaces (59b) ; et
un système de stockage (54a) conçu pour stocker des informations de configuration, pour chacune de la pluralité d'interfaces permettant de communiquer avec un ordinateur hôte (30a, 30b), qui déterminent une opération de chacune des interfaces ; et
le dispositif périphérique étant **caractérisé en ce qu'**il comprend :
un système de transmission d'informations de configuration conçu pour, en réponse à la réception d'un signal de demande pour les informations de configuration depuis l'ordinateur hôte (30a, 30b) qui est reçu par l'intermédiaire d'une de la pluralité d'interfaces (59a, 59b), déterminer l'interface qui a reçu le signal de demande, déterminer que les informations de configuration pour l'interface qui a reçu le signal de demande doivent être affichées initialement, et transmettre à l'ordinateur hôte :
les informations de configuration stockées dans le système de stockage de l'interface (59b) qui a reçu le signal de demande, et
des informations de liaison destinées à indiquer les informations de configuration stockées dans le système de stockage d'une interface (59a) qui n'a pas reçu le signal de demande ;
le dispositif périphérique comprenant en outre un serveur Internet conçu pour :
recevoir le signal de demande depuis un navigateur Internet de l'ordinateur hôte ;
lire les informations de configuration pour l'une de la pluralité d'interfaces, par l'intermédiaire de laquelle le dispositif périphérique reçoit le signal de demande depuis l'ordinateur hôte, à partir du système de stockage ;
créer une page Internet permettant d'afficher un écran de réglage comprenant les informations de configuration de lecture en tant que valeur initiale sur l'ordinateur hôte, la page Internet comprenant également lesdites informations de liaison permettant d'acquérir l'écran de réglage de l'interface qui n'a pas reçu le signal de demande ; et
transmettre la page Internet créée au navigateur Internet de l'ordinateur hôte.

2. Dispositif périphérique (50), selon la revendication 1,
dans lequel le système de transmission d'informations de configuration est conçu pour transmettre des informations configurant une page Internet, dans laquelle la configuration de l'interface qui a reçu le signal de demande est décrite, tandis que la page Internet est comprise dans un écran de réglage pour accepter une opération de mise à jour liée aux informations de configuration de l'interface qui a reçu le signal de demande, à l'ordinateur hôte (30a, 30b) émettant le signal de demande pour les informations de configuration par l'intermédiaire d'une de la pluralité d'interfaces (59a, 59b) lorsque le signal de demande pour les informations de configuration depuis l'ordinateur hôte sont reçues par l'intermédiaire d'une de la pluralité d'interfaces tandis que les informations de configuration pour chacune de la pluralité d'interfaces sont stockées dans le système de stockage, et
un système de mise à jour de configuration destiné à réécrire les informations de configuration stockées dans le système de stockage (54a) en fonction du signal d'instruction reçu lorsque le dispositif périphérique (50) reçoit le signal d'instruction de mise à jour depuis l'ordinateur hôte (30a, 30b) donné par l'utilisateur par l'intermédiaire de la page Internet, étant prévu dans le dispositif périphérique.

3. Dispositif périphérique (50) selon la revendication 2,
dans lequel la page Internet devant être transmise par le système de transmission d'informations de configuration est dotée desdites informations de liaison pour demander une page Internet qui est comprise dans l'écran de réglage lié aux autres interfaces que l'interface correspondant aux informations de configuration capables d'être mises à jour par l'intermédiaire de la page Internet comprise dans l'écran de réglage ; et
le système de transmission d'informations de configuration est conçu pour transmettre la page Internet comprise dans l'écran de réglage pour accepter une opération de mise à jour destinée à mettre à jour les informations de configuration de l'interface correspondant aux informations de liaison à l'ordinateur hôte (30a/30b) émettant le signal de demande lorsque le signal de demande transmis en fonction des informations de liaison est reçu par le système de transmission d'informations de configuration tandis que la page Internet comprend les informations de configuration pour l'interface correspondant aux informations de liaison.

4. Dispositif périphérique (50), selon l'une quelconque des revendications 1 à 3,
comprenant une interface connectée à un réseau câblé et une interface connectée à un réseau sans fil en tant que pluralité d'interfaces.

5. Système de communication (1), comprenant :
au moins un dispositif périphérique (50) selon la revendication 1 ; et
un ordinateur hôte (30a, 30b) qui est conçu pour communiquer avec l'au moins un dispositif périphérique (50) par l'intermédiaire d'une de la pluralité d'interfaces (59a, 59b),
l'ordinateur hôte (30a/30b) comprenant :
un navigateur Internet ;
un système de réception d'informations de configuration conçu pour recevoir depuis le système de transmission d'informations de configuration depuis l'au moins un des dispositifs périphériques (50) :
les informations de configuration stockées dans le système de stockage de l'interface (59b) qui a reçu le signal de demande, et
des informations de liaison destinées à indiquer les informations de configuration stockées dans le système de stockage d'une interface (59a) qui n'a pas reçu le signal de demande ;
l'ordinateur hôte comprenant en outre un système d'affichage d'écran de réglage monté de manière commutable pour afficher, pour chacune des interfaces, un écran de réglage avec les informations de configuration dans le système de stockage (54a) étant indiquées à l'intérieur, l'écran de réglage pouvant être commuté entre des interfaces en fonction d'une instruction provenant d'un utilisateur ;
le système de communication comprenant en outre :
un système de commande d'affichage d'écran conçu pour afficher l'écran de réglage d'une des interfaces qui relaient une communication entre l'ordinateur hôte et l'au moins un des dispositifs périphériques de préférence parmi la pluralité d'interfaces fournies à l'au moins un des dispositifs périphériques comme écran affiché initialement sur le système d'affichage d'écran de réglage ;
l'ordinateur hôte étant configuré pour :
recevoir une page Internet, et
afficher la page Internet reçue sur le navigateur Internet ; et
recevoir, en réponse à la réception d'une opération sur les informations de liaison affichées sur le navigateur Internet, une page Internet comprenant les informations de configuration indiquées par les informations de liaison depuis le dispositif périphérique.

6. Système de communication (1) selon la revendication 5,
dans lequel l'au moins un dispositif périphérique comprend une interface connectée à un réseau câblé et une interface connectée à un réseau sans fil en tant que la pluralité des interfaces.

7. Système de communication (1) selon la revendication 5 ou la revendication 6,
dans lequel l'écran de réglage est conçu pour accepter une opération de mise à jour liée aux informations de configuration étant stockées dans le système de stockage (54a) de l'au moins un dispositif périphérique (50) ;
dans lequel l'ordinateur hôte (30a/30b) comprend un système d'instruction de mise à jour destiné à transmettre un signal d'instruction de mise à jour à l'au moins un dispositif périphérique en fonction d'une opération de la part de l'utilisateur sur l'écran de réglage affiché dans une unité d'affichage par le système d'affichage d'écran de réglage, le signal d'instruction de mise à jour étant un signal pour indiquer des informations de configuration mises à jour destinées à mettre à jour les informations de configuration ; et
l'au moins un dispositif périphérique comprenant un système de mise à jour de configuration destiné à réécrire les informations de configuration stockées dans le système de stockage en fonction du signal d'instruction reçu lorsque l'au moins un dispositif périphérique reçoit le signal d'instruction de mise à jour depuis l'ordinateur hôte par l'intermédiaire de l'une quelconque d'une pluralité d'interfaces.

8. Support utilisable par ordinateur comprenant des instructions lisibles par ordinateur, qui lorsqu'exécutées sur un ordinateur comportant une pluralité d'interfaces (59a, 59b) permettant de communiquer avec un dispositif externe et un système de stockage (54a) conçu pour stocker des informations de configuration, pour chacune de la pluralité d'interfaces, qui déterminent une opération de chacune des interfaces, sont conçues pour effectuer les étapes de :
détermination de l'interface qui a reçu le signal de demande ;
détermination que les informations de configuration pour l'interface qui a reçu le signal de demande doivent être affichées initialement ;
transmission des informations de configuration stockées dans le système de stockage de l'interface (59b) qui a reçu le signal de demande ; et
des informations de liaison destinées à indiquer les informations de configuration stockées dans le système de stockage d'une interface (59a) qui n'a pas reçu le signal de demande ;
réception du signal de demande depuis un navigateur Internet de l'ordinateur hôte ;
lecture des informations de configuration pour l'une de la pluralité d'interfaces, par l'intermédiaire de laquelle le dispositif périphérique a reçu le signal de demande depuis l'ordinateur hôte, à partir du système de stockage ;
création d'une page Internet permettant d'afficher un écran de réglage comprenant les informations de configuration de lecture en tant que valeur initiale sur l'ordinateur hôte, la page Internet comprenant également lesdites informations de liaison permettant d'acquérir l'écran de réglage de l'interface qui n'a pas reçu le signal de demande ; et
transmission de la page Internet créée au navigateur Internet de l'ordinateur hôte.

9. Support utilisable par ordinateur selon la revendication 8,
dans lequel les informations de configuration sont conçues pour configurer une page Internet, et la page Internet devant être transmise dans les informations de configuration est dotée d'informations de liaison pour demander une page Internet qui est comprise dans l'écran de réglage lié aux autres interfaces que l'interface correspondant aux informations de configuration capables d'être mises à jour par l'intermédiaire de la page Internet comprise dans l'écran de réglage ; et
une étape de réécriture des informations de configuration stockées dans le système de stockage (54a) en fonction du signal d'instruction reçu lorsque l'ordinateur reçoit le signal d'instruction de mise à jour depuis le dispositif externe donné par l'utilisateur par l'intermédiaire de la page Internet, est comprise dans les étapes devant être effectuées par l'ordinateur.

10. Support utilisable par ordinateur selon la revendication 9,
dans lequel la page Internet devant être transmise dans la transmission des informations de configuration est dotée desdites informations de liaison pour demander une page Internet qui est comprise dans l'écran de réglage lié aux autres interfaces que l'interface correspondant aux informations de configuration capables d'être mises à jour par l'intermédiaire de la page Internet comprise dans l'écran de réglage ; et
dans lequel les étapes effectuées par l'ordinateur comprennent la transmission de la page Internet comprise dans l'écran de réglage pour accepter une opération de mise à jour destinée à mettre à jour les informations de configuration de l'interface correspondant aux informations de liaison au dispositif externe émettant le signal de demande lorsque le signal de demande transmis en fonction des informations de liaison est reçu par le système de transmission d'informations de configuration tandis que la page Internet comprend les informations de configuration pour l'interface correspondant aux informations de liaison.
